# EUROPEAN PATENT SPECIFICATION

(11) **EP 0 379 591 B1**
(45) Date of publication and mention of the grant of the patent: **19.01.1994**
(21) Application number: 89907303.5
(22) Date of filing: 26.06.1989
(51) Int. Cl.: B01D 53/04, B01D 53/36, F24F 7/06, F24C 15/20

(54) **EXHAUST SMOKE PURIFIER APPARATUS**
VORRICHTUNG ZUM REINIGEN VON ABLUFT
EPURATEUR DE FUMEE D'ECHAPPEMENT

(30) Priority: 28.06.1988 JP 159981/88; 13.07.1988 JP 174510/88
(43) Date of publication of application: 01.08.1990
(73) Proprietor: MATSUSHITA ELECTRIC INDUSTRIAL CO., LTD., Kadoma-shi, Osaka-fu, 571 (JP)
(72) Inventor: MIYAHARA, Shinjirou, Nara 639-11 (JP); MATSUMOTO, Ikuo, Nara 630-01 (JP); TABATA, Kenji, Nara 630-02 (JP); FUKUDA, Hiroshi, Nara 630 (JP)
(74) Representative: Dr. Elisabeth Jung Dr. Jürgen Schirdewahn Dipl.-Ing. Claus Gernhardt
(86) International application number: PCT/JP89/00632
(87) International publication number: WO 90/00081

(56) References cited:
- DE-A- 3 715 598
- JP-A- 5 217 964
- JP-A- 5 697 520
- JP-U- 5 914 607

## Description

The present invention relates to an apparatus for capturing oil smoke and the like generated at cooking from a range used in a kitchen and the like.

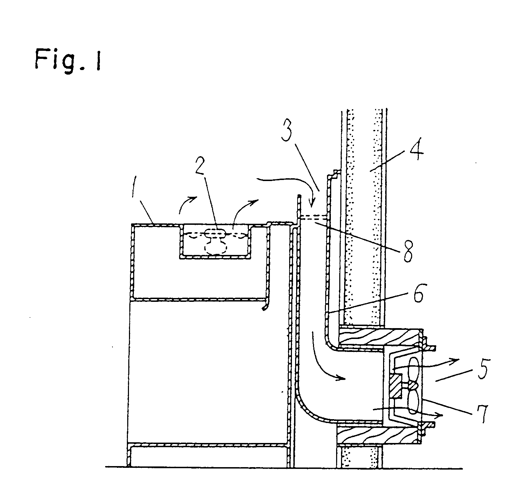

Hitherto, the exhaust smoke purifier apparatus for capturing oil smoke generated at cooking from a range used in a kitchen and the like is constituted, as shown in Fig.1, by providing an exhaust smoke duct 6 whereof one end is open as an inlet port 3 at a side part of a burner part 2 of a range 1 and the other end is directed outdoor penetrating through a wall 4 of a house to make an exhaust port 5; a blower 7 is provided at the exhaust port 5. Furthermore, a detachable grease filter 8 is provided in the exhaust smoke duct 6 at the part near the inlet port 3, in order to isolate oil contained in the oil smoke. Solid arrows show air flows.

In the above-mentioned constitution, when the blower 7 is driven, an air flow is generated which is from the inlet port 3 to the exhaust port 5, and oil smoke is drafted together with the air flow drafted from the inlet port 3 into the exhaust duct 6. On the other hand, the oil contained in the oil smoke adheres on the grease filter 8, and thereafter purified air is drafted outdoor from the exhaust port 5. Hereupon, the grease filter 8 is removed from the exhaust duct 6 and washed by detergent or the like.

In the above-mentioned constitution, however, the oil adhering on the grease filter needs to be washed by removing the grease filter from the exhaust duct, and there is a problem of insanitariness that the environment is polluted at the washing and the like. Besides, odors generated at the cooking are exhausted outdoor as they are at a large amount in a short time.

From the JP-A-56 97 520 it is already known, furthermore, to clean an adsorbent which is arranged downstream of a blower by an electrical heater.

The present invention is for solving such conventional problems and serves purposes to effectively capture oil smoke inside the kitchen by integrally assembling purifier such as catalyst and odor adsorbent in the exhaust duct, thereby to sanitarily process the oil and odor.

In order to reach such purpose the features of claim 1 are provided.

The reservoir part serves the temporary reserving of oil smoke and the like, particularly during the cooking process. In the purifier part the oil or the like can be separated after the cooking process when transferred from the reservoir part by heating its adsorbent. The whole apparatus can be integrated in the exhaust smoke duct.

The reservoir part can be composed of a grease filter containing a built-in electric heater at an upperstream side and a honeycomb active carbon arranged at a down stream side of the grease filter.

### BRIEF DESCRIPTION OF DRAWINGS

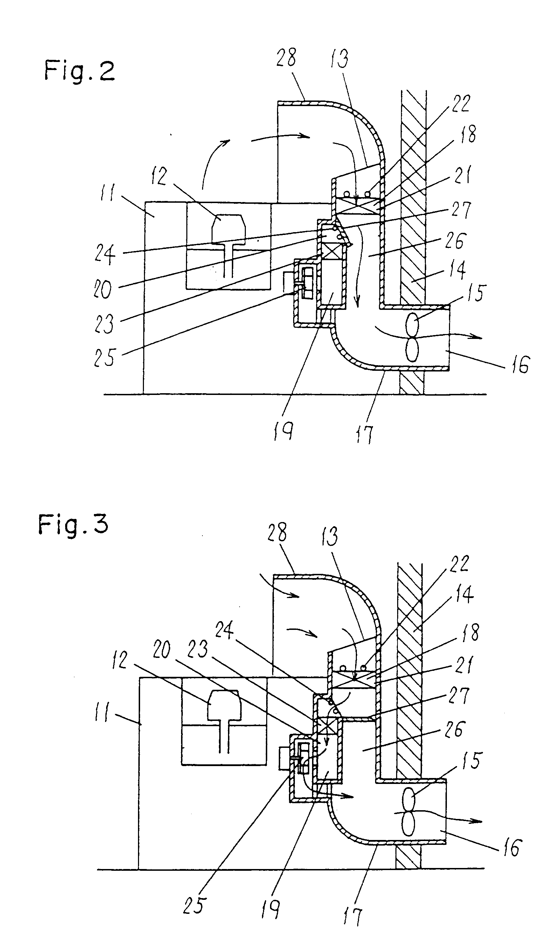

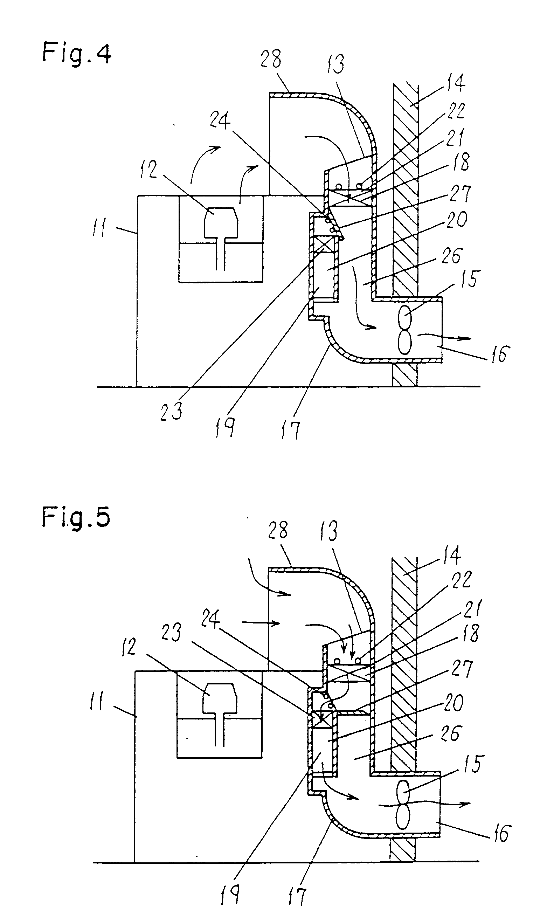

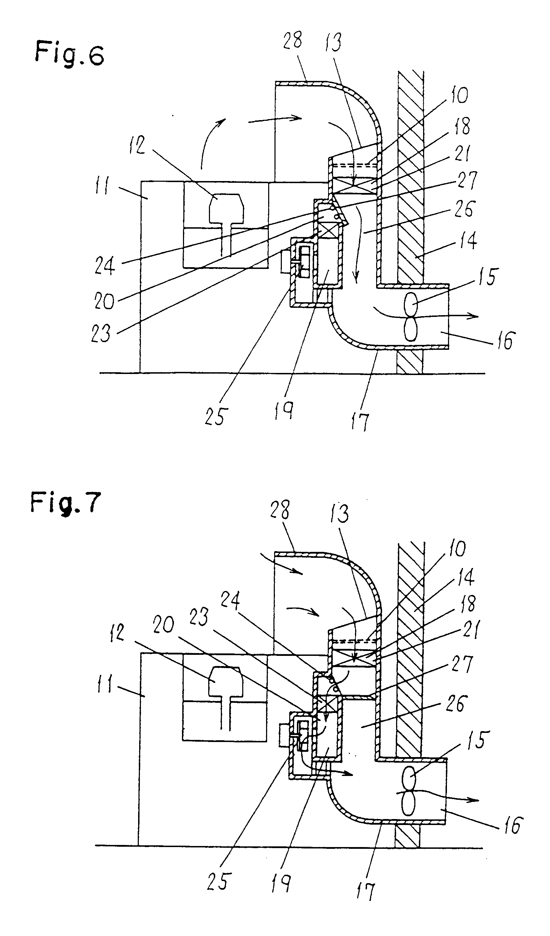

Fig.1 is a sectional view of a conventional exhaust smoke purifier apparatus; Fig.2 is a sectional view of an exhaust smoke purifier apparatus in capturing operation for oil smoke and the like showing a first embodiment of the present invention; Fig.3 is a sectional view of the above-mentioned apparatus in purifying operation; Fig.4 is a sectional view of an exhaust smoke purifier apparatus in capturing operation for oil smoke and the like showing a second embodiment; Fig.5 is a sectional view of the above-mentioned apparatus in purifying operation; Fig.6 is a sectional view of an exhaust smoke purifier apparatus in capturing operation for oil smoke and the like showing a third embodiment; and Fig.7 is a sectional view of the above-mentioned apparatus in purifying operation.

Hereafter, a first embodiment of the present invention is elucidated with reference to the accompanying figures. Fig.2 and Fig.3 are sectional views showing an embodiment of the present invention, Fig.2 shows a constitution in capturing operation for oil smoke and the like, and Fig.3 shows a constitution in purifying operation.

An exhaust smoke purifier apparatus of the present invention is constituted that, as shown in Fig.2 and Fig. 3, a reservoir part 18 is provided for temporarily reserving oil and odor and a purifier part 19 is provided for purifying the oil. Both parts 18 and 19 are integrally arranged in an exhaust smoke duct 17 whereof one end is open as an inlet port 13 at a side part of a burner part 12 of a range 11 and the other end is directed outdoor penetrating through a wall 14 of a house to make an exhaust port 16 provided with an exhaust blower 15. The purifier part 19 is provided in a bypass path 20 of the main path 26 of the exhaust smoke duct 17. The upstream side of the bypass path 20 faces said reservoir part 18 and the downstream side faces the exhaust port 16. Said reservoir part 18 is constituted by providing an adsorbent 21 of activated carbon formed into honeycomb-shape and a heater 22 for heating the adsorbent 21 at a vicinity upstream thereof. Said purifier part 19 is constituted with an oxidation catalyst 23 formed into honeycomb-shape, and a reheating heater 24 provided at the upstream side thereof for reheating air flow introduced in the purifier part 19. An auxiliary blower 25 is provided at the downstream side of the oxidation catalyst 23. Further a damper 27 for closing selectively either an inlet of said bypass path 20 or of said main path 26 is provided. A blow rate of the auxiliary blower 25 is set to have a smaller blow rate than a blow rate of the exhaust blower 15. Numeral 28 is a hood provided over the range 11 for effective capturing of oil smoke and the like produced at the range 11, and solid arrows show air flows.

Next, the operation Of capturing oil smoke and the like in cooking is elucidated. This operation is that, as shown in Fig. 2, after forming an air flow path constitution of closing the entrance of the bypass path 20 and opening the main path 26, the exhaust blower 15 is driven, then an air flow from the inlet port 13 to the exhaust port 16 is generated, and oil smoke produced at the range 11 is drafted into the exhaust smoke duct 17 together with this air flow. In this case, the exhaust blower 15 has enough blow characteristic for effectively capturing the oil smoke and the like. On the other hand, when oil component and odor drafted into the exhaust smoke duct 17 pass through the reservoir part 18 provided in the inlet port 13, they are made separated by being adhered on the surface of the adsorbent 21 constituting the reservoir part 18, and at the same time the odor is also adsorbed in the adsorbent 21 removed therefrom. During this operation, the auxiliary blower 25 is stopped and electrification to the heater 22 and the reheating heater 24 is stopped too.

Next, purifying operation after cooking is elucidated. This operation is, as shown in Fig. 3, that after closing the main path 26 with the damper 27 and constituting an air flow path of opening the inlet of the bypass path 20, the auxiliary blower 25 constituting the purifier part 19 is driven, and at the same time the heater 22 constituting the reservoir part 18 heats the adsorbent 21, thereby to release components adhered on or adsorbed in the adsorbent 21 therefrom, and they are introduced in the purifier part 19 at a small air blow rate, made to pass through the oxidation catalyst 23, and are exhausted as purified air from the exhaust port 16. During this operation, the exhaust blower 15 is stopped, and the reheating heater 24 provided in the purifier part 19 is electrified until the operating temperature for making the oxidation catalyst 23 effectively acts, only in the case that the temperature of an air flow entering in the bypass path 20 is low.

Next, a second embodiment is elucidated. Fig.4 and Fig.5 show an embodiment of the present invention, and Fig.4 shows a constitution in capturing operation for oil smoke and the like, and Fig.5 shows a constitution in purifying operation.

An exhaust smoke purifier apparatus A of the present invention is made, as shown in Fig.4 and Fig.5, by providing a reservoir part 18 for temporarily reserving oil and odor and a purifier part 19 for purifying the oil, integrally in an exhaust smoke duct 17 whereof one end is open as an inlet port 13 at a side part of a burner part 12 of a range 11 and the other end is directed outdoor penetrating through a wall 14 of a house to make an exhaust port 16 provided with an exhaust blower 15, and the purifier part 19 is provided in a bypass path 20 of a main path of said exhaust smoke duct 17. The upstream side of the bypass path 20 is facing said reservoir part 18 and the downstream side is facing the exhaust port 16. Said reservoir part 18 is constituted by providing an adsorbent 21 of activated carbon formed into honeycomb-shape and a heater 22 for heating the adsorbent 21 at a vicinity upstream thereof. Said purifier part 19 is constituted with an oxidation catalyst 23 formed into honeycomb-shape, and a reheating heater 24 provided at upstream side thereof for reheating air flow introduced in the purifier part 19. Further, a damper 27 for closing selectively either an inlet of said bypass path 20 or of said main path 26 is provided, and a blow rate of the exhaust blower 15 is made to be variable for at least two kinds of blow rate. Numeral 28 is a hood provided over the range 11 for effectively capturing oil smoke and the like produced at the range 11, and solid arrows show air flows.

Next, the operation of capturing oil smoke and the like in cooking is elucidated. This operation is that, as shown in Fig.4, after forming an air flow path constitution of closing the entrance of the bypass path 20 and opening the main path 26, the exhaust blower 15 is driven at a greater air blow rate, then an air flow from the inlet port 13 to the exhaust port 16 is generated, and oil smoke produced at the range 11 is drafted into the exhaust smoke duct 17 together with this air flow. In this case, since the exhaust blower 15 is driven at a capacity of greater air blow rate, it can effectively capture the oil smoke and the like. On the other hand, when oil component and odor drafted into the exhaust smoke duct 17 pass through the reservoir part 18 provided in the inlet port 13, they are made separated by being adhered on the surface of the adsorbent 21 constituting the reservoir part 18, and at the same time the odor is also adsorbed in the adsorbent 21 removed therefrom. During this operation, electrification to the heater 22 and the reheating heater 24 is stopped too.

Next, purifying operation after cooking is elucidated. This operation is, as shown in Fig.5, that after closing the main path 26 with the damper 27 and constituting an air flow path of opening the inlet of the bypass path 20, the exhaust blower 15 is driven at a small air blow rate, and at the same time the heater 22 constituting the reservoir part 18 heats the adsorbent 21, thereby to release components adhered on or adsorbed in the adsorbent 21 therefrom, and they are introduced in the purifier part 19 at a small air blow rate, made to pass through the oxidation catalyst 23, and are exhausted as purified air from the exhaust port 16. During this operation, the reheating heater 24 provided in the purifier part 19 is electrified until the operating temperature for making the oxidation catalyst 23 effectively acts, only in the case that the temperature of an air flow entering in the bypass path 20 is low.

Next, a third embodiment is elucidated. Fig.6 and Fig.7 show an embodiment of the present invention, Fig.6 shows a constitution in capturing operation for oil smoke and the like, and Fig.7 shows a constitution in purifying operation.

An exhaust smoke purifier apparatus A of the present invention is made, as shown in Fig.6 and Fig.7, by providing a reservoir part 18 for temporarily reserving oil and odor and a purifier part 19 for purifying the oil, integrally in an exhaust smoke duct 17 whereof one end is open as an inlet port 13 at a side part of a burner part 12 of a range 11 and the other end is directed outdoor penetrating through a wall 14 of a house to make an exhaust port 16 provided with an exhaust blower 15, and the purifier part 19 is provided in a bypass path 20 of a main path 26 of said exhaust smoke duct 17. The upstream side of the bypass path 20 is facing said reservoir part 18 and the downstream side is facing the exhaust port 16. Said reservoir part 18 is constituted by comprising an adsorbent 21 of activated carbon formed into honeycomb-shape and a grease filter 10 containing a built-in electric heater at a vicinity upstream thereof at a certain distance. And said purifier part 19 is constituted with an oxidation catalyst 23 formed into honeycomb-shape, and a reheating heater 24 provided at the upstream side thereof for reheating air flow introduced in the purifier part 19, and an auxiliary blower 25 provided at the downstream side of the oxidation catalyst 23. Further, at an inlet of said bypass path 20 a damper 27 for closing selectively either the inlet of said bypass path 20 or said main path 26 is provided, and a blow rate of the auxiliary blower 25 is set to have a smaller blow rate than a blow rate of the exhaust blower 15. Numeral 28 is a hood provided over the range 11 for effective capturing of oil smoke and the like produced at the range 11, and solid arrows show air flows.

Next, the operation of capturing oil smoke and the like in cooking is elucidated. This operation is that, as shown in Fig.6, after forming an air flow path constitution of closing the entrance of the bypass path 20 and opening the main path 26, the exhaust blower 15 is driven, then an air flow from the inlet port 13 to the exhaust port 16 is generated, and oil smoke produced at the range 11 is drafted into the exhaust smoke duct 17 together with this air flow. In this case, the exhaust blower 15 has enough blow characteristic for effectively capturing the oil smoke and the like. On the other hand, when oil component and odor drafted into the exhaust smoke duct 17 pass through the reservoir part 18 provided in the inlet port 13, they are made separated by being adhered on or adsorbed in the grease filter 10 and the adsorbent 21 made of activated carbon formed into honeycomb-shape constituting the reservoir part 18. Particularly, mists of large grains of oil of high boiling point components are caught by the grease filter 10 before being captured in the adsorbent 21 made of activated carbon formed into honeycomb-shape, to prevent the adsorbent 21 from being polluted. The odour and the like as well as the oil mist are efficiently adsorbed by the adsorbent 21. During this operation, the auxiliary blower 25 is stopped and electrification to the built-in electric heater contained in the grease filter 10 and the reheating heater 24 is stopped too.

Next, purifying operation after cooking is elucidated. This operation is, as shown in Fig.7, that after closing the main path 26 with the damper 27 and constituting an air flow path of opening the inlet of the bypass path 20, the auxiliary blower 25 constituting the purifier part 19 is driven, and the built-in electric heater contained in the grease filter 10 is energized. By red heating of the electric heater, the oil components of high boiling point adhering on the grease filter 10 are decomposed and removed therefrom and besides, the adsorbent 21 at the downstream side therefrom is also heated and releases components adsorbed therein, and at the same time, the components are introduced in the purifier part 19 with a small air blow rate, pass through the oxidation catalyst 23, and are exhausted as purified air from the exhaust port 16. During this operation, the exhaust blower 15 is stopped, and further the reheating heater 24 provided in the purifier part 19 is electrified until the operating temperature for making the oxidation catalyst 23 effectively acts, only in the case that the temperature of an air flow entering in the bypass path 20 is low.

As mentioned above, since the exhaust smoke purifier apparatus of the present invention operates at great air blow rate in cooking and at small air blow rate after cooking, it can to effectively capture the oil smoke and the like and can effectively purify with very small amount of purifying agent; and the apparatus can be made small, is given a regeneration function by containing purifying agent and adsorbent in the exhaust smoke duct, requires almost no man's hands for treating oil and the like, and is very clean.

Further, it is possible to simplify the constitution of the purifier apparatus by using a blower having at least two or more kinds of blow characteristic.

Furthermore, it is possible to effectively adsorb odor as well as oil mist having high boiling point, by providing a grease heater containing a built-in electric heater, an adsorbent of activated carbon formed into honeycomb-shape, and an oxidation catalyst in the exhaust smoke duct.

### List of reference numerals of drawings

- 1: Range
- 2: Burner part
- 3: Inlet port
- 4: Wall
- 5: Exhaust port
- 6: Exhaust smoke duct
- 7: Blower
- 8: Grease filter
- 9: Exhaust smoke purifier apparatus
- 10: Grease filter
- 11: Range
- 12: Burner part
- 13: Inlet port
- 14: Wall
- 15: Exhaust blower
- 16: Exhaust port
- 17: Exhaust smoke duct
- 18: Reservoir part
- 19: Purifier part
- 20: Bypass path
- 21: Adsorbent
- 22: Heater
- 23: Oxidation catalyst
- 24: Reheating heater
- 25: Auxiliary blower
- 26: Exhaust smoke duct side path
- 27: Damper
- 28: Hood

## Claims

1. An exhaust smoke purifier apparatus comprising:
an exhaust smoke duct (17), one end of it having an inlet port (13) in a vicinity of a range (11) and the other end of it having an exhaust port (16) which is provided with an exhaust blower (15);
a reservoir part (18), which is arranged in said exhaust smoke duct (17), faces said inlet port (13) and includes an adsorbent (21) and a heater (22) for temporarily holding and releasing oil smoke and the like;
a main path (26) and a bypass path (20) being provided in parallel between said reservoir part (18) and said exhaust blower (15);
a purifier part (19) being arranged in said bypass path (20); and
a damper (27) for selectively closing an inlet of said bypass path (20) and said main path (26).

2. An exhaust smoke purifier apparatus in accordance with claim 1, wherein
said purifier part (19) includes an oxidation catalyst (23) and a reheating heater (24) being arranged upstream of that oxidation catalyst, said reservoir part (18) further comprises a grease filter (10) at the upstream side of the adsorbent (21).

3. An exhaust smoke purifier apparatus in accordance with claim 1 or 2, wherein
said exhaust blower (15) is drivable in two modes of air blow rate;
in a first mode, when oil smoke and the like from said range (11) in cooking is to be temporarily captured in said reservoir part (18), said exhaust blower (15) being drivable in a larger air blow rate;
and in a second mode, when said oil smoke and the like is to be introduced in and purified by said purifier part (19), said exhaust blower (15) being drivable in a smaller air blow rate after cooking.

4. An exhaust smoke purifier apparatus in accordance with claim 1 or 2, wherein
said purifier part (19) further includes an auxiliary blower (25) which is set to have a smaller air blow rate than that of said exhaust blower (15),
oil smoke and the like from said range (11) in cooking being temporarily capturable in said reservoir part (18) by driving said exhaust blower (15),
and said oil smoke and the like being introduceable in and purifyable by said purifier part (19) by driving said auxiliary blower (25) after cooking.

## Patentansprüche

1. Eine Vorrichtung zum Reinigen von Abzugrauch, die folgende Elemente umfaßt:
eine Abzugrauchleitung (17), bei der ein Ende eine Einlaßöffnung (13) in der Nähe eines Herds (11) aufweist und das andere Ende eine Auslaßöffnung (16) aufweist, welche mit einem Abzuggebläse (15) versehen ist;
einen Speicherteil (18), welcher in der Abzugrauchleitung (17) angeordnet ist, der Einlaßöffnung (13) gegenüberliegt und einen Adsorbenten (21) und eine Heizvorrichtung (22) zum vorübergehenden Halten und Freigeben von Ölrauch und dergleichen umfaßt;
einen Hauptweg (26) und einen Nebenweg (20), welche parallel zueinander zwischen dem Speicherteil (18) und dem Abzuggebläse (15) vorgesehen sind;
einen Reinigungsteil (19), der in dem Nebenweg (20) angeordnet ist; und
eine Schließvorrichtung (27) zum selektiven Schließen eines Einlasses des Nebenwegs (20) und des Hauptwegs (26).

2. Eine Vorrichtung zum Reinigen von Abzugrauch nach Anspruch 1, in der
der Reinigungsteil (19) einen Oxidationskatalysator (23) und eine wiedererwärmende Heizvorrichtung (24), welche stromaufwärts von diesem Oxidationskatalysator angeordnet ist, umfaßt, wobei der Speicherteil (18) außerdem einen Fettfilter (10) an der stromaufwärts gelegenen Seite des Adsorbenten (21) umfaßt.

3. Eine Vorrichtung zum Reinigen von Abzugrauch nach Anspruch 1 oder 2, in der
das Auslaßgebläse (15) auf zwei Arten der Luftblasgeschwindigkeit angetrieben werden kann;
wobei auf eine erste Art, wenn Ölrauch und dergleichen von dem Herd (11) beim Kochen vorübergehend in dem Speicherteil (18) aufgefangen werden soll, das Auslaßgebläse (15) in einer höheren Luftblasgeschwindigkeit angetrieben werden kann;
und auf eine zweite Art, wenn dieser Ölrauch und dergleichen in den Reinigungsteil (19) geleitet und von ihm gereinigt werden soll, das Auslaßgebläse (15) in einer niedrigeren Luftblasgeschwindigkeit nach dem Kochen angetrieben werden kann.

4. Eine Vorrichtung zum Reinigen von Abzugrauch nach Anspruch 1 oder 2, in der
der Reinigungsteil (19) außerdem ein Zusatzgebläse (25) umfaßt, welches so eingestellt ist, daß es eine niedrigere Luftblasgeschwindigkeit als das Auslaßgebläse (15) hat,
Ölrauch und dergleichen von dem Herd (11) beim Kochen vorübergehend durch Antreiben des Auslaßgebläses (15) in dem Speicherteil (18) gehalten werden kann,
und der Ölrauch und dergleichen durch Antreiben des Zusatzgebläses (25) nach dem Kochen in den Reinigungsteil (19) geleitet und von ihm gereinigt werden kann.

## Revendications

1. Dispositif purificateur de fumée d'évacuation comprenant :
un conduit d'évacuation de fumée (17) dont une extrémité comporte un orifice d'entrée (13) au voisinage d'une cuisinière (11) et dont l'autre extrémité comporte un orifice d'évacuation (16) qui est muni d'un ventilateur d'évacuation (15) ;
une partie de réservoir (18) qui est disposée dans le conduit d'évacuation de fumée (17), en regard de l'orifice d'entrée (13) et comporte un adsorbant (21) et un dispositif de chauffage (22) pour conserver temporairement et libérer la fumée d'huile et analogues ;
un trajet principal (26) et un trajet de dérivation (20) étant prévus en parallèle entre la partie de réservoir (18) et le ventilateur d'évacuation (15) ;
une partie de purificateur (19) étant disposée dans le trajet de dérivation (20), et
un clapet (27) pour fermer sélectivement soit l'entrée du trajet de dérivation (20), soit l'entrée du trajet principal (26).

2. Dispositif purificateur de fumée d'évacuation selon la revendication 1, dans lequel
la partie du purificateur (19) comporte un catalyseur d'oxydation (23) et un dispositif de rechauffage (24) étant disposé en amont de ce catalyseur d'oxydation, la partie de réservoir (18) comprend de plus un filtre de graisse (10) sur le côté amont de l'adsorbant (21).

3. Dispositif purificateur de fumée d'évacuation selon la revendication 1 ou 2, dans lequel
le ventilateur d'évacuation (15) est commandable dans deux modes de vitesse de soufflage d'air ;
dans un premier mode, lorsque la fumée d'huile et analogues provenant de la cuisinière (11) pendant la cuisson doit être temporairement capturée dans la partie de réservoir (18), le ventilateur d'évacuation (15) est commandable à une vitesse de soufflage d'air plus grande ;
et dans un second mode, lorsque la fumée d'huile et analogues doit être introduite dans et purifiée par la partie de purificateur (19) le ventilateur d'évacuation (15) est commandable à une vitesse de soufflage d'air plus faible après cuisson.

4. Dispositif purificateur de fumée d'évacuation selon la revendication 1 ou 2, dans lequel
la partie de purificateur (19) comporte de plus un ventilateur auxiliaire (25) qui est commandé pour avoir une vitesse de soufflage d'air plus faible que celle du ventilateur d'évacuation (15) ;
la fumée d'huile et analogues provenant de la cuisinière (15) pendant la cuisson étant temporairement capturable dans la partie de réservoir (18) en commandant le ventilateur d'évacuation (15),
et la fumée d'huile et analogues pouvant être introduite dans et pouvant être purifiée par la partie de purificateur (19) en commandant le ventilateur auxiliaire (25) après cuisson.
